# FASCICULE DE BREVET EUROPEEN

(11) **EP 3 796 390 B1**
(45) Date de publication et mention de la délivrance du brevet: **26.10.2022**
(21) Numéro de dépôt: 20197140.5
(22) Date de dépôt: 21.09.2020
(51) Int. Cl.: H01L 27/24, H01L 45/00, H04L 9/32, H04L 9/08

(54) **DISPOSITIF DE MICROÉLECTRONIQUE INTÉGRANT UNE FONCTION PHYSIQUE NON-CLONABLE FOURNIE PAR DES MÉMOIRES RÉSISTIVES ET SON PROCÉDÉ DE FABRICATION**
MIKROELEKTRONISCHE VORRICHTUNG MIT EINER NICHTKLONIERBAREN PHYSISCHEN FUNKTION, DIE DURCH RESISTIVE SPEICHER BEREITGESTELLT WIRD, UND HERSTELLUNGSVERFAHREN DAFÜR
MICROELECTRONIC DEVICE INCLUDING A PHYSICAL UNCLONABLE FUNCTION REALISED BY RESISTIVE MEMORIES AND FABRICATION METHOD THEREOF

(30) Priorité: 23.09.2019 FR 1910482
(43) Date de publication de la demande: 24.03.2021
(73) Titulaire: Commissariat à l'Énergie Atomique et aux Énergies Alternatives, 75015 Paris (FR)
(72) Inventeur: CHARPIN-NICOLLE, Christelle, 38054 Grenoble Cedex 09 (FR); PEBAY-PEYROULA, Florian, 38054 Grenoble Cedex 09 (FR)
(74) Mandataire: Brevalex

(56) Documents cités:
- WO-A1-2018/175973
- WO-A1-2019/027702
- US-A1- 2013 023 105
- US-A1- 2016 148 664
- US-A1- 2017 048 072
- BAFRANI H A ET AL: "A facile approach for reducing the working voltage of Au/TiO2/Au nanostructured memristors by enhancing the local electric field", NANOTECHNOLOGY, vol. 29, 015205, 4 décembre 2017 (2017-12-04), XP020323196, ISSN: 0957-4484, DOI: 10.1088/1361-6528/AA99B7
- CHARPIN-NICOLLE C ET AL: "Impact of roughness of TiN bottom electrode on the forming voltage of HfO2 based resistive memories", MICROELECTRONIC ENGINEERING, vol. 221, 111194, 27 novembre 2019 (2019-11-27), XP086032195, ISSN: 0167-9317, DOI: 10.1016/J.MEE.2019.111194

## Description

### Domaine technique

L'invention concerne le domaine de l'intégration de fonctions physiques non clonables à des dispositifs de microélectroniques.

L'invention a ainsi pour objet un procédé de fabrication d'un dispositif de microélectronique intégrant une fonction physique non clonable et un tel dispositif.

### État de l'art antérieur

Afin de lutter contre la contrefaçon de dispositifs de microélectroniques, il est connu d'intégrer à ces dispositifs de microélectronique des fonctions physiques non-clonables. De telles fonctions physiques non-clonables, également connues sous le sigle anglais PUF pour « Physical unclonable function » sont généralement fournies, dans le cadre de tels dispositifs de microélectroniques, sous la forme d'une sous-partie du dispositif dite sous-partie PUF, qui est conformée, d'une manière unique et non clonable, pour fournir une réponse donnée à un challenge donné. Une telle conformation unique et non clonable peut être obtenue par l'utilisation de la variabilité de certains procédés de fabrication mis en œuvre dans la microélectronique.

Ainsi par exemple, il est connu des travaux de Po-Hao Tseng et de ses coauteurs publiés le 2 mars 2018 dans la revue scientifique « Japanese Journal of Applied Physics », Volume 57 référencé 04FE04, d'utiliser la variabilité dans la tension de formation des mémoires résistives pour définir une telle PUF. US 2016/148664 A1 divulgue un dispositif de mémoire microélectronique comprenant une pluralité de cellules mémoires résistives (type ReRAM), ayant une première partie pour former une PUF et une deuxième partie de mémoire des données, les cellules comprenant une portion de couche diélectrique entre deux électrodes métalliques. Des matrices similaires, ne réalisant que les mémoires PUF, sont connues de WO 2019/027702 A1, WO 2018/175973 A1 et US 2017/048072 A1, par exemple. L'augmentation de la rugosité de l'interface couche mémoire diélectrique/électrode des cellules de type ReRAM ou CBRAM est enseignée par US 2013/023105 A1 ou des travaux de H A Bafrani et al (Nanotechnology 29 (2018) 015205).

En effet, les mémoires résistives, telles que les mémoires résistives à base d'oxyde connues sous le sigle OxRam, doivent tout d'abord être soumises à une tension de formation, plus connue sous la dénomination anglaise « forming voltage », dite dans la suite de ce document « tension de forming », permettant de générer un filament conducteur et fournir ainsi leur fonction de mémoire, en la faisant passer dans un état conducteur.

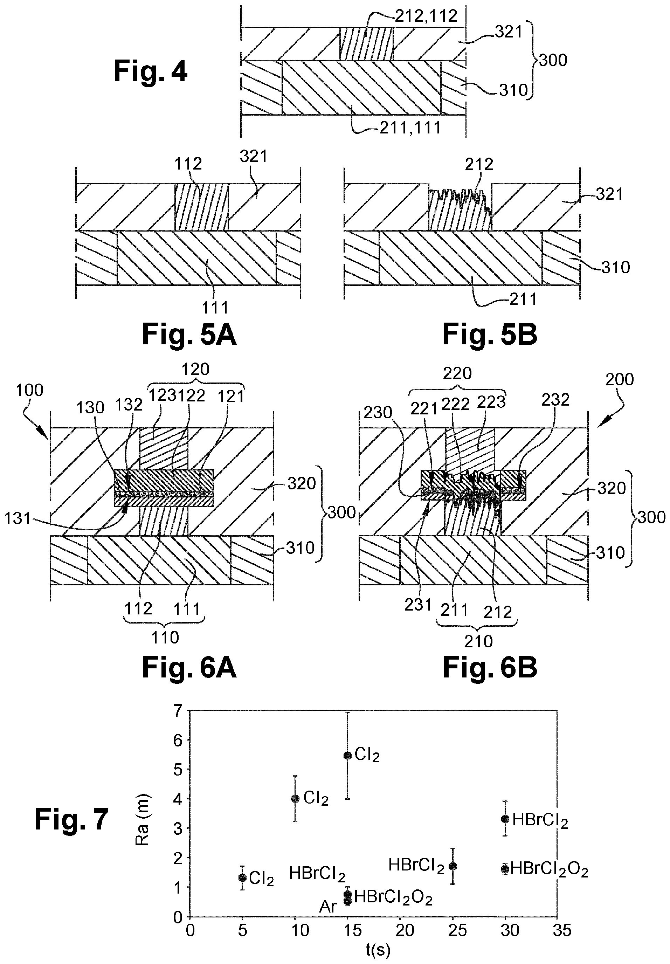

Po-Hao Tseng et ses coauteurs enseignent ainsi, notamment par la figure 5 de leur article, d'équiper un dispositif de microélectronique d'une pluralité de cellules mémoires résistives et d'appliquer successivement à ces cellules mémoires résistives une « tension de forming » croissante, ceci de manière à obtenir la formation d'une moitié des mémoires résistives. Une fois cette étape de formation, ou « forming », effectuée, la répartition des mémoires formées et des mémoires non formées est aléatoire et unique, puisque liée à la variabilité du procédé de formation des mémoires résistives. Une simple interrogation de l'état formé ou non d'une ou plusieurs mémoires résistives constitue une interrogation au sens d'une PUF.

Néanmoins, si l'intégration de PUF telle que proposée par PO-Hao Tseng et ses coauteurs permet d'aisément aménager une PUF à un dispositif de microélectronique, elle est relativement longue à mettre en œuvre et relativement complexe à automatiser.

Ainsi, il n'existe pas à l'heure actuelle de procédé d'intégration d'une PUF à base de mémoires résistives à des dispositifs de microélectroniques qui puisse être aisément automatisable et qui puisse être pleinement compatible avec la production de masse.

### Exposé de l'invention

L'invention vise à résoudre l'inconvénient précité.

A cet effet, l'invention concerne un procédé de fabrication d'un dispositif de microélectronique comprenant une pluralité de mémoires résistives, une première partie de ces mémoires résistives étant configurée pour former une fonction physique non-clonable, plus connue sous le sigle anglais PUF, les mémoires résistives de ladite première partie de mémoires résistives étant dites mémoires PUF, une deuxième partie de mémoire résistive étant destinée à fourniture d'une fonction de mémoire au dispositif de microélectronique, les mémoires résistives de la deuxième partie étant dite mémoire de stockage, le procédé de fabrication comprenant les étapes suivantes :
- fourniture d'un support comprenant une pluralité de premières électrodes métalliques,
- pour chaque première électrode, formation d'une portion de couche diélectrique respective comprenant une première surface de contact en regard de la première électrode correspondant et une deuxième surface opposée à la première surface de contact, les portions de couche diélectrique destinée à la formation des mémoires PUF présentant, sur au moins l'une de la première surface de contact et de la deuxième surface, une rugosité de surface supérieure à celle de la même surface des portions de couche diélectrique destinée à la formation des mémoires de stockage,
- pour chaque portion de couche diélectrique, formation d'une deuxième électrode en contact de la deuxième surface, ladite deuxième surface étant alors une deuxième surface de contact en regard de la deuxième électrode et la portion de couche diélectrique étant interposée entre la première et la deuxième électrode, les mémoires résistives étant ainsi formées.

Avec un tel procédé de formation d'un dispositif de microélectronique, les mémoires PUF présentent, de par leur rugosité de surface plus importante de leur portion de couche diélectrique, une dispersion de rugosité entre deux portions de couche diélectrique de mémoire PUF plus importante qu'entre deux portions de couche diélectrique de mémoire de stockage ou selon l'art antérieur. Ainsi, en raison de cette dispersion de rugosité des différentes portions de couche diélectrique des mémoires PUF, il en résulte une dispersion plus importante des « tensions de forming ". De ce fait, la fonction PUF peut être générée simplement en appliquant une « tension de forming " moyenne, la dispersion augmentée dans les « tensions de forming " permettant d'obtenir la formation de sensiblement la moitié des mémoires PUF.

Avec un tel procédé, il n'est donc pas nécessaire, comme c'est le cas pour le procédé enseigné par PO-Hao Tseng et ses coauteurs, de passer par une longue étape de recherche de la « tension de forming " permettant d'obtenir la formation de la moitié des mémoires puisque la « tension de forming " est déterminée par la rugosité de surface des portions de couche diélectrique.

De ce fait, l'obtention de la formation de sensiblement la moitié des mémoires PUF étant facilitée et ne nécessitant pas une longue période de test, le procédé de fabrication peut aisément s'automatiser et est pleinement compatible avec la fabrication de masse.

On notera que dans une réalisation pratique de l'invention, la rugosité de surface des portions de couche diélectrique peut être mesurée par une valeur d'écart moyen de rugosité Rₐ ou une valeur de hauteur maximale de profil Rₘₐₓ déterminée au moyen d'images d'1 µm par 1 µm mesurée par microscopie à force atomique également connue sous le sigle anglais AFM pour « Atomic Force Microscopy ".

On notera également qu'en alternative, l'invention peut également être définie comme un procédé de fabrication d'un dispositif de microélectronique comprenant une pluralité de mémoires résistives, une première partie de ces mémoires résistives étant configurée pour former une fonction physique non-clonable, plus connue sous le sigle anglais PUF, les mémoires résistives de ladite première partie de mémoires résistives étant dites mémoires PUF, une deuxième partie de mémoire résistive étant destinée à fourniture d'une fonction de mémoire au dispositif de microélectronique, les mémoires résistives de la deuxième partie étant dite mémoire de stockage, le procédé de fabrication comprenant les étapes suivantes :
- fourniture d'un support comprenant une pluralité de premières électrodes métalliques,
- pour chaque première électrode, formation d'une portion de couche diélectrique respective comprenant une première surface de contact en contact avec la première électrode correspondant et une deuxième surface opposée à la première surface de contact, les portions de couche diélectrique destinée à la formation des mémoires PUF présentant sur au moins une de la première surface de contact et de la deuxième surface une dispersion de rugosité de surface supérieure à celle de la même surface des portions de couche diélectrique destinée à la formation des mémoires de stockage,
- pour chaque portion de couche diélectrique, formation d'une deuxième électrode en contact de la deuxième surface, ladite deuxième surface étant alors une deuxième surface de contact par laquelle la portion de couche diélectrique est en contact avec la deuxième électrode et la portion de couche diélectrique étant interposée entre la première et la deuxième électrode, les mémoires résistives étant ainsi formées.

Une telle dispersion de rugosité peut généralement être une dispersion d'une valeur d'écart moyen de rugosité Rₐ des portions de couche diélectrique ou d'une valeur de hauteur maximale de profil Rₘₐₓ des portions de couche diélectrique, telle qu'un écart type de la valeur d'écart moyen de rugosité Rₐ ou de la valeurde hauteur maximale de profil Rₘₐₓ pour les portion de couche diélectrique. Ces valeurs peuvent être déterminées à partir d'image de microscopie à force atomique de 1 µm par 1 µm.

L'étape de formation de la portion de couche diélectrique peut comprendre les sous-étapes suivantes :
- structuration d'une surface des premières électrodes correspondant aux mémoires PUF de manière à ce que lesdites premières électrodes présentes une rugosité de surface supérieure à celles des première électrodes correspondant aux mémoires de stockage,
- dépôt de chaque portion de couche diélectrique en contact de la première surface de la première électrode correspondante de manière à ce que la rugosité de la première surface de la première électrode soit au moins partiellement reportée sur la première surface de contact de la portion de couche diélectrique correspondante, cette rugosité reportée étant, pour les portions de couche diélectrique destinées à la formation des mémoire PUF supérieure à celle des portions de couche diélectrique destinée à la formation des mémoire de stockage.

Avec une telle structuration de la surface des premières électrodes, il est aisé d'appliquer une grande dispersion dans les valeurs de rugosité sans que cela n'affecte la qualité de la couche d'isolant puisque cette dernière est déposée avec un dépôt conforme. Il est ainsi aisé d'obtenir une grande dispersion de la « tension de forming », ceci sans que cela n'affecte la fiabilité des mémoires PUF.

La sous-étape de structuration peut être fournie par une gravure des premières électrodes destinée à la formation des mémoires PUF ladite surface des premières électrodes étant préférentiellement gravée au moyen d'une technique de gravure au plasma ou de gravure ionique réactive. Avec une telle gravure basée sur la chimie, il est aisé d'obtenir une bonne dispersion dans les valeurs de rugosité et donc de la « tension de forming ».

Lors de la sous-étape de dépôt de chaque portion de couche diélectrique, le dépôt du matériau isolant formant lesdites portions de couche diélectrique peut être réalisé par un dépôt de couches minces atomiques.

Un tel dépôt de couches minces atomique est également connu sous le sigle anglais ALD, pour « Atomic Layer Deposition ».

Lors de la sous-étape de dépôt de chaque portion de couche diélectrique, le dépôt du matériau isolant formant lesdites portions de couche diélectrique peut être réalisé par un dépôt physique en phase vapeur.

De tels dépôts permettent un bon transfert de rugosité entre la couche déposée et la couche support sur laquelle a lieu le dépôt.

Lors de l'étape de formation de la portion de couche diélectrique, il est prévu :
- préalablement à la sous-étape de structuration d'une surface des premières électrodes, il est prévu une sous-étape de protection des premières électrodes destinées à la formation des mémoires de stockage afin de protéger lesdites premières électrodes lors de la sous-étape de structuration de la surface des premières électrodes, et
entre les sous-étapes de structuration et de dépôt de chaque portion de couche diélectrique, il est prévu une sous-étape de suppression de la protection des premières électrodes destinées à la formation des mémoires de stockage.

De cette manière, la structuration de surface effectuée sur les premières électrodes des mémoires PUF n'a aucune incidence sur les premières électrodes des mémoires de stockage.

Les mémoires résistives peuvent être des mémoires résistives à base d'oxyde,
et lors de l'étape de formation de la portion de couche diélectrique pour chaque première électrode, chaque portion de couche diélectrique destinée à la formation d'une mémoire PUF, l'au moins une surface, parmi la première surface de contact et la deuxième surface présente une valeur d'écart moyen de rugosité Ra comprise entre 1 et 3 nm, 1 et 3 nm compris, voire entre 2 et 3 nm, 2 et 3 nm compris.

Avec une telle rugosité, les mémoires PUF présentent une dispersion de « tension de forming » maximale.

Les mémoires résistives peuvent être des mémoires résistives à pont conducteur.

Un tel type de mémoires résistives à pont conducteur est également connu sous le sigle anglais CBRam pour « Conductive Bridging Random Access memory.

Il peut en outre être prévu les étapes suivantes d' :
- application d'une tension de formation entre la première et la deuxième électrodes de chacune des mémoires PUF, cette tension étant adaptée pour permettre la formation de sensiblement une moitié des mémoires PUF,
- application d'une tension de formation supérieure à une tension de formation minimale de mémoires de stockage entre la première et la deuxième électrode de chacune des mémoires de stockage.

L'étape de formation d'une portion de couche diélectrique peut comprendre une sous-étape de formation pour chacune des portions de couche diélectrique destinée à la formation des mémoires PUF d'une portion de couche diélectrique supplémentaire de telle manière que cette portion de couche diélectrique supplémentaire soit disposée entre la première surface de contact et la première électrode.

De cette manière, la « tension de forming » des mémoires PUF peut être augmentée et il est envisageable avec une telle augmentation de la « tension de forming » moyenne des mémoires PUF de la faire correspondre à la « tension de forming » utilisée pour les mémoire de stockage.

L'invention concerne en outre un dispositif de microélectronique comprenant une pluralité de mémoires résistives, une première partie de ces mémoires résistives étant configurée pour former une fonction physique non-clonable, plus connue sous le sigle anglais PUF, les mémoires résistives de ladite première partie de mémoires résistives étant dites mémoires PUF, une deuxième partie de mémoire résistive étant destinée à fourniture d'une fonction de mémoire au dispositif de microélectronique, ledit dispositif comprenant un support, les mémoires résistives de la deuxième partie étant dite mémoire de stockage chaque mémoire résistive comprenant :
- une première et une deuxième électrode métallique, la première électrode étant aménagée dans un support,
- une portion de couche diélectrique s'interposant entre la première et la deuxième électrode et présentant une première surface de contact en contact avec la première électrode et une deuxième surface de contact en contact avec la deuxième électrode.

Les portions de couche diélectrique des mémoires PUF présentent sur au moins une de la première surface de contact et de la deuxième surface de contact une rugosité de surface de ladite surface supérieure à celle de la même surface des portions de couche diélectrique des mémoires de stockage.

Un tel dispositif présente les avantages liés au procédé de fabrication selon l'invention qui a permis sa fabrication.

En variante, il est également possible de définir le dispositif selon l'invention comme un dispositif de microélectronique comprenant une pluralité de mémoires résistives, une première partie de ces mémoires résistives étant configurée pour former une fonction physique non-clonable, plus connue sous le sigle anglais PUF, les mémoires résistives de ladite première partie de mémoires résistives étant dites mémoires PUF, une deuxième partie de mémoire résistive étant destinée à fourniture d'une fonction de mémoire au dispositif de microélectronique, les mémoires résistives de la deuxième partie étant dite mémoire de stockage chaque mémoire résistive comprenant :
- une première et une deuxième électrode métallique, la première électrode étant aménagée dans un support,
- une portion de couche diélectrique s'interposant entre la première et la deuxième électrode et présentant une première surface de contact en contact avec la première électrode et une deuxième surface de contact en contact avec la deuxième électrode.

Les portions de couche diélectrique des mémoires PUF présentent sur au moins une de la première surface de contact et de la deuxième surface de contact une dispersion de rugosité de surface de ladite surface supérieure à celle de la même surface des portions de couche diélectrique des mémoires de stockage.

Les mémoires résistives peuvent être des mémoires résistives à base d'oxyde,
les portions de couche diélectrique des mémoires PUF présentant sur au moins l'une de la première et la deuxième surface de contact une valeur d'écart moyen de rugosité Ra compris entre 1 et 3 nm, 2 et 3 nm compris , cet écart moyen de rugosité Ra étant préférentiellement compris entre 1 et 3 nm.

Les mémoires résistives peuvent être des mémoires résistives à pont conducteur.

Les mémoires PUF peuvent comprendre chacune en outre une portion de couche diélectrique supplémentaire disposée entre la première surface de contact et la première électrode.

De cette manière, il est envisageable de fournir des mémoires PUF avec une « tension de forming » moyenne comparable à la « tension de forming » utilisée pour les mémoires de stockage.

### Brève description des dessins

La présente invention sera mieux comprise à la lecture de la description d'exemples de réalisation, donnés à titre purement indicatif et nullement limitatif, en faisant référence aux dessins annexés sur lesquels :
- la figure 1 illustre un dispositif selon l'invention comprenant à la fois des mémoires résistives formant une PUF, dites mémoires PUF, et des mémoires résistives classiques,
- la figure 2 illustre graphiquement la variation de la « tension de forming » d'une mémoire résistive en fonction de la valeur d'écart moyen de rugosité Rₐ de la couche d'oxyde de ladite mémoire résistive,
- la figure 3 illustre graphiquement la variation de la « tension de forming » d'une mémoire résistive en fonction de la valeur de hauteur maximale de profil Rₘₐₓ de la couche d'oxyde de ladite mémoire résistive,
- la figure 4 illustre une structure intermédiaire destinée à la formation d'une mémoire résistive conforme à l'invention, que celle-ci soit une mémoire PUF ou une mémoire résistive classique,
- la figure 5A illustre une structure intermédiaire destinée à la formation d'une mémoire résistive classique conforme à l'invention,
- la figure 5B illustre une structure intermédiaire destinée à la formation d'une mémoire PUF conforme à l'invention,
- la figure 6A illustre une mémoire résistive classique obtenue à partir des structures intermédiaires illustrées sur la figure 5A,
- la figure 6B illustre une mémoire PUF obtenue à partir des structures intermédiaires illustrées sur la figure 5B,
- la figure 7 illustre graphiquement la variation de la valeur d'écart moyen de rugosité Ra d'une couche d'oxyde d'Hafnium en fonction de la composition des gaz utilisés pendant une gravure plasma et du temps d'attaque,
- la figure 8 illustre une mémoire PUF selon un variante de l'invention dans laquelle les mémoires PUF comprennent, entre un premier via et la couche d'oxyde, une couche supplémentaire d'oxyde ceci de manière à augmenter la tension de forming moyenne des mémoires PUF.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Description détaillée

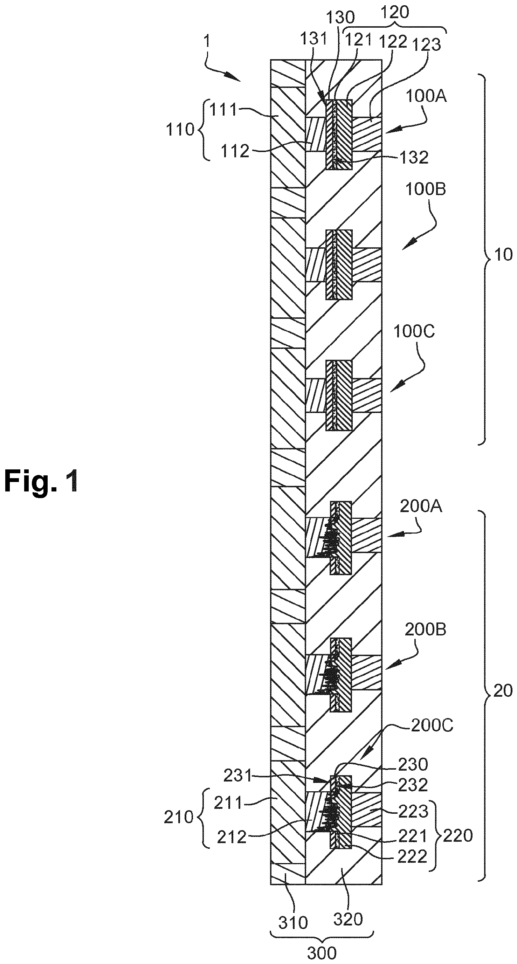

La figure 1 illustre un dispositif de microélectronique 1 comprenant une pluralité de mémoires résistives 100, 100A, 100B, 100C, 200, 200A, 200B, 200C dont une première partie 10 sont des mémoires résistives 100A, 100B, 100B selon l'art antérieur, dites mémoires de stockage, et une deuxième partie 20 est configurée pour former une fonction physique non clonable, lesdites mémoires résistives 200, 200A, 200B, 200C de ladite deuxième partie étant dites mémoires PUF.

Il est à noter que si dans ce mode de réalisation, les mémoires résistives sont des mémoires résistives à base d'oxyde, plus connues sous la dénomination de mémoire OxRAM, compte tenu des similarités entre les différents types de mémoires résistives, l'homme du métier est à même d'appliquer l'invention aux autres types de mémoires résistives ceci à partir de simples essais de routine.

On notera que selon une possibilité usuelle des mémoires résistives, les mémoires résistives 100, 100A, 100B, 100C, 200, 200A, 200B, 200C d'un dispositif de microélectronique 1 peuvent être intégrées à un niveau de métallisation dudit dispositif de microélectronique. C'est cette possibilité qui est décrite dans ce premier mode de réalisation. De ce fait, afin de simplifier la présente description de l'invention, seul ce premier niveau de métallisation est montré sur les figures et est décrit. Les autres parties d'un tel dispositif sont en effet classiques pour l'homme du métier et ne font pas l'objet de la présente divulgation.

Comme montré sur la figure 1, une mémoire résistive 100A, 100B, 100C, 200A, 200B, 200C selon l'invention, qu'elle soit une mémoire de stockage ou une mémoire PUF comporte :
- une première électrode métallique 110, 210 et une deuxième électrode métallique 120, 220,
- une portion de couche d'oxyde 130, 230 s'interposant entre la première et la deuxième électrode 110, 120, 210, 220 et présentant une première surface de contact 131, 231 en contact avec la première électrode 110, 210 et une deuxième surface de contact 132, 232 en contact avec la deuxième électrode 120, 220.

Selon le principe de l'invention, les portions de couche d'oxyde 230 des mémoires PUF présentent une rugosité de surface d'au moins l'une de la première et la deuxième surface de contact 231, 232 supérieure à celle de la même surface des portions de couche d'oxyde 130 des mémoires de stockage. Dans le présent mode de réalisation, cette rugosité de surface augmentée vis-à-vis des mémoires de stockage est présente, comme le montre la figure 1, sur chacune de la première et de la deuxième surface de contact 231, 232 des portions de couche d'oxyde des mémoires PUF 200, 200A, 200B, 200C, la rugosité de surface de la première surface de contact 231 étant transférée sur la deuxième surface de contact 132, 232. Une telle rugosité augmentée, et donc la dispersion de rugosité qui en découle, permettent d'obtenir, pour les mémoires PUF, une « tension de forming » présentant une dispersion plus importante que celle des mémoires résistives classiques telles que les mémoires de stockage 100, 100A, 100B, 100C.

Ainsi, les couches d'oxyde 130 des mémoires de stockage 100, 100A, 100B, 100C présentent une rugosité dite « faible » et peu dispersée, ceci de manière à présenter une dispersion de « tension de forming » faible vis-à-vis de cette des mémoires PUF 200, 200A, 200B, 200C.

Plus précisément, dans le premier mode de réalisation, le support 300 est un support de microélectronique classique, tel qu'un substrat de silicium ou d'un autre matériau semiconducteur, dans lequel sont intégrés des composants actifs, tels que des transistors MOSFET ou des composants opto-électroniques, et, éventuellement des composants passifs, qui sont reliés entre eux aux moyens de niveau de métallisation dont seuls deux niveaux sont illustrés sur la figure 1, le reste du support n'étant pas illustré. Ces deux niveaux de métallisation comportent chacun au moins un matériau diélectrique dans lequel sont logés des vias métalliques.

Plus précisément, dans le présent mode de réalisation et comme illustré sur la figure 1, le premier et le deuxième niveau illustrés sur la figure 1 comprennent respectivement une première couche diélectrique 310 en dioxyde de silicium SiO₂ et une deuxième couche diélectrique 320 en nitrure de silicium SiₓN_{y}.

La première électrode 110, 210 de chacune des mémoires résistives 100, 100A, 100B, 100C, 200, 200A, 200B, 200C est ainsi en partie logée dans la première couche diélectrique 310 et en partie logée dans la deuxième couche diélectrique 320, tandis que la portion de couche d'oxyde 130, 230 et la deuxième électrode 120, 220 de chaque mémoire résistives 100, 100A, 100B, 100C, 200, 200A, 200B, 200C sont entièrement logées dans la deuxième couche diélectrique 320. Bien entendu, cette configuration à deux couches diélectriques n'est fournie qu'à titre d'exemple et d'autre configuration sont envisageable sans que l'on sorte du cadre de l'invention. On notera en particulier qu'il est ainsi parfaitement envisageable que la deuxième couche diélectrique soit remplacée par plusieurs couches diélectriques réalisées dans un ou plusieurs matériaux diélectriques respectifs.

Chaque première électrode 110, 210, comprend une première couche de métallisation 111, 211 formant, par exemple une ligne de métal d'un circuit de connexion du dispositif de microélectronique 1, logée dans la première couche diélectrique 310, et un premier via métallique 112, 212 en contact avec la première couche de métallisation et logée dans la deuxième couche diélectrique 320.

Chaque couche de métallisation 111, 211 peut être réalisée dans un matériau métallique adapté pour la formation d'une piste de circuit de connexion, ce matériau métallique pouvant être sélectionné dans le groupe constitué du nitrure de titane TiN, de l'aluminium Al, du Cuivre Cu, du tungstène W et leurs alliages. La première couche de métallisation 111, 211 peut présenter des dimensions classiques d'une couche de métallisation de l'art antérieur et ainsi présenter une épaisseur comprise 100 nm à 1 µm.

Chaque premier via métallique 112, 212 peut être réalisé dans un matériau métallique adapté pour la formation d'une mémoire résistives. Dans ce premier mode pour lequel les mémoires résistives sont à base d'oxyde, chacun des premier vias métalliques 112, 222 peut être, par exemple réalisé en un nitrure de titane TiN. Le premier via métallique 122, 212 peut présenter une épaisseur comprise entre 20 nm et 1 µm voire entre 50 et 500 nm. Chacun premier via métallique 112, 212 présente une première surface opposée à la couche de métallisation 111, 211 correspondant, ladite première surface formant une surface de la première électrode. Chaque premier via métallique 112, 212, et donc la première électrode 110, 210 correspondante, est en contact avec la première surface de contact 131, 231 de la portion de couche d'oxyde 130, 230 correspondante par sa première surface.

Dans ce premier mode de réalisation, pour des raisons de fabrication, la première surface des premiers via métalliques 122, 222 correspondants aux mémoires de stockage et aux mémoires PUF présentent une rugosité de surface sensiblement identique à celle de première couche de contact 131, 231 de la portion de couche d'oxyde 130 correspondante.

Chaque portion de couche d'oxyde 130, 230 est une portion de couche diélectrique adaptée pour fournir une fonction de mémoire résistive. Ainsi, dans ce premier mode de réalisation dans lequel les mémoires résistives 100, 100A, 100B, 100C, 200, 200A, 200B, 200C sont des mémoires résistives à base d'oxyde, la couche d'oxyde peut être réalisée dans un diélectrique dit High-K, c'est-à-dire un diélectrique présentant une constante diélectrique supérieure à celle du dioxyde de silicium SiO₂, tel le dioxyde d'Hafnium HfO₂. Selon cette possibilité dans lequel la couche diélectrique est en dioxyde d'Hafnium HfO₂, dans ce premier mode de réalisation, chaque portion de couche d'oxyde 130, 230 peut présenter une épaisseur comprise entre 5 et 10 nm. Bien entendu, l'épaisseur de la couche d'oxyde 130, 230 est adaptée en fonction du matériau diélectrique qui la compose.

Selon le principe de l'invention, dans ce premier mode de réalisation, chaque portion de couche d'oxyde 130, 230 forme une portion de couche diélectrique selon l'invention.

La deuxième face de contact 132, 232 de chaque portion de couche d'oxyde 130, 230 est en contact avec la deuxième électrode 120, 220 correspondante. La deuxième électrode 120, 220, comprend :
- une couche d'électrode 121, 221, en contact avec la portion de couche d'oxyde 130, 230 correspondante sur la deuxième surface de contact 131, 231 de cette dernière,
- une couche métallique de contact 122, 222, en contact avec la couche d'électrode 121, 221 correspondante à l'opposé de la portion couche de couche d'oxyde 130, 230 correspondante,
- un deuxième via vertical 123, 223, en contact avec la couche métallique de contact 122, 222 correspondante à l'opposé de la couche métallique de contact 122, 222, le deuxième via vertical étant en contact, sur une surface opposée avec un couche métallique d'un niveau de métallisation non montré.

Chaque couche d'électrode 121, 221, dans le cadre de ce présent mode de réalisation dans lequel les mémoires résistives sont à base d'oxyde, peut être réalisée en Titane Ti et peut présenter une épaisseur comprise entre 5 et 10 nm. Chaque couche d'électrode 121, 221 présente une rugosité de surface sensiblement identique à celle de de la couche d'isolation 130 correspondante.

La couche métallique de contact 122, 222 est réalisée dans un matériau conducteur tel que du nitrure de titane TiN et peut présenter une épaisseur comprise entre 10 et 500 nm.

Le deuxième via vertical 123, 223 peut être réalisé dans un matériau conducteur adapté pour la formation d'un via vertical, tel que par exemple du nitrure de titane TiN, du tungstène W ou du cuivre Cu.

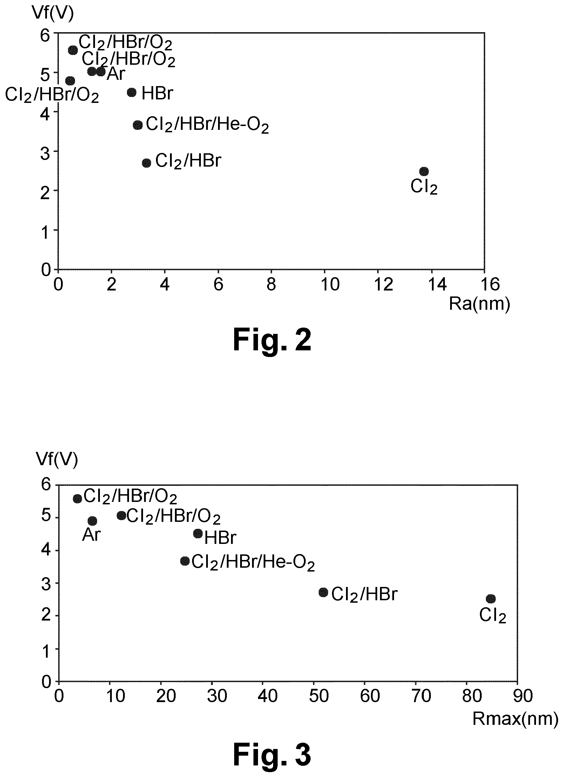

Plus précisément, en ce qui concerne la rugosité adaptée d'au moins une de la première et de la deuxième surface de contact 131, 132, 231, 232, les figures 3 et 4 illustrent la variation de la « tension de forming » en fonction de respectivement la valeur d'écart moyen de rugosité Ra et de la valeur de hauteur maximale de profil Rmax de la première et de la deuxième surface de contact 131, 132, 231, 232 d'une mémoire résistive à base d'oxyde conforme à l'invention.

Il est à noter que, dans le cadre du présent document, les valeurs d'écart moyen de rugosité Ra et les valeurs de hauteur maximale de profil Rmax sont déterminées en conformité avec la norme ISO4287 ceci à partir d'images AFM de 1 µm par 1 µm.

On notera que pour déterminer ces valeurs, chaque mémoire résistive 100, 100A, 100B, 100C, 200, 200A, 200B, 200C est conforme à ce présent mode de réalisation, la portion de couche d'oxyde 130 et la couche d'électrode 131 présentant chacune une épaisseur de 10 nm.

On peut ainsi voir sur la figure 2, que la « tension de forming » Vf varie avec les valeurs d'écart moyen de rugosité Ra lorsque cette dernière est comprise entre 0,1 nm et 4 nm, ceci en passant de 6 V à 3V, pour ensuite se stabiliser à 2,5 V pour les valeurs d'écart moyen de rugosité Ra supérieures à 4 nm.

Ce même phénomène est également observable sur la figure 3 représentant l'évolution de la « tension de forming » en fonction de avec la valeur de hauteur maximale de profil Rmax mesurée ; la « tension de forming » Vf diminuant lorsque la valeur de hauteur maximale de profil Rmax passe de 5 nm à 40 nm. La « tension de forming » se stabilise ensuite pour les valeurs de hauteur maximale de profil Rmax supérieures à 40 nm.

On notera que, bien entendu, lorsque, conformément à l'invention, une couche, telle qu'une portion de couche d'oxyde 130, 230, présente une rugosité de surface augmentée, la dispersion de la rugosité de surface est également augmentée.

Or, comme montrée par la figure 2, la « tension de forming » diminue brusquement quand la valeur d'écart moyen de rugosité Ra évolue entre 1 nm et 3 nm et plus particulièrement entre 2 et 3 nm.

Les dispersions de rugosité étant plus élevées quand la valeur d'écart moyen de rugosité Ra augmente, on obtiendra une dispersion importante des valeurs de tensions de forming pour des valeurs de rugosité moyennes visées dans la gamme 1 nm à 3 nm, cette valeur étant de préférence dans la gamme 2 nm à3 nm.

D'une manière équivalente, il est possible d'obtenir une dispersion de la « tension de forming » maximale pour des valeurs de hauteur maximale de profil Rmax comprises entre 5 et 50 nm et préférentiellement comprise entre 15 et 50 nm.

Ainsi, selon le principe de l'invention et à titre d'exemple, pour une valeur d'écart moyen de rugosité Ra visée de d'ordre de 2,5 nm, la valeur d'écart moyen de rugosité Ra des vias verticaux 212, et donc des portions de couche d'oxyde 230, peut être compris entre 1,5 nm et 3,5 nm. Cette dispersion de rugosité est à l'origine d'une grande dispersion de « tension de forming » et d'un abaissement de la valeur « moyenne » de « tension de forming », celle-ci étant divisé par deux. Ainsi dans ce cas particulier, on aura une variation de la « tension de forming » des mémoires PUF de plus de 30% autour de la valeur moyenne de « tension de forming ».

Pour obtenir une telle variation de rugosité de surface selon le principe de l'invention, il est possible de mettre en œuvre un procédé de fabrication d'un dispositif de microélectronique 1 comprenant les étapes suivantes :
- fourniture d'un support 300 comprenant les premières électrodes 110, 210 destinées à la formation des mémoires résistives 100, 100A, 100B, 100C et des mémoires PUF 200, 200A, 200B, 200C, lesdites premières électrodes étant aménagées dans une première couche diélectrique 310 dudit support 300, chaque première électrode 110, 210 comprenant une couche de métallisation 111, 211 et un premier via vertical 112, 212, le premier via vertical 112, 212 présentant une première surface opposée à la couche de métallisation 111, 211, ladite première surface formant une surface de la première électrode 110, 210, comme illustré sur la figure 4,
- dépôt d'une couche de protection, non représentée, telle qu'une résine photosensible insolée, recouvrant les premiers via verticaux 112, destinés à la formation des mémoires de stockage,
- structuration de la première surface des premiers via verticaux destinés à la formation d'une mémoire PUF 200, 200A, 200B, 200C, ladite structuration étant réalisée par une gravure physique, telle qu'une gravure plasma ou une gravure ionique réactive, la couche de protection protégeant les premiers via verticaux destinés à la formation des mémoires de stockage,
- retrait de la couche de protection, par exemple par une étape de décapage, également connue sous la dénomination anglaise de « stripping » (enlèvement de la couche de résine), ceci de manière à ce que les premiers via verticaux 112 destinés à la formation des mémoires de stockage 100, 100A, 100B, 100C présentent une première surface avec une rugosité préservée, comme illustré sur la figure 5A, et que les premier via verticaux destinés à la formation des mémoires PUF présentent une rugosité supérieure, et donc une dispersion des valeurs de rugosité augmentées qui sont à transmettre à la couche d'oxyde 130, comme illustré sur la figure 5B,
- dépôt d'une couche d'oxyde dont les parties en en contact de la première surface des vias métalliques 112, 212 forment les portion de couche d'oxyde 130, 230 correspondantes, ce dépôt de la couche d'oxyde étant préférentiellement un dépôt de couches minces atomiques, chacune des portions de couche d'oxyde étant en contact avec le premier via vertical correspondant par une première surface de contact 131, 231.
- dépôt d'une couche de métal, telle qu'une couche de titane Ti, dont les parties en contact avec les portions de couche d'oxyde 130, 230 forment les couches d'électrode 121, 221 correspondantes, lesdites partie de la couche de métal formant les couches d'électrodes 121, 221 étant déposées en contact de la deuxième surface de contact 132, 232 des portion de couche d'oxyde 130, 230 correspondante,
- dépôt d'une couche conductrice, telle qu'une couche de nitrure de titane TiN, les parties de ladite couche conductrice en contact avec les couches d'électrode 121, 221 formant chacune les couches métalliques de contact 122, 222 correspondante ceci à l'opposé de la portion de couche d'oxyde 130, 230 correspondante,
- gravure localisée, par exemple par l'utilisation d'étapes successives de dépôt d'une résine photosensible, lithographie de ladite résine, de gravure chimique et de retrait de la résine photosensible, afin d'individualiser les portions de couche d'oxyde 130, les couches d'électrode 121, 221 et les couches métalliques de contact 122, 222 et ainsi de définir les motifs des cellules de mémoire de stockage et des cellules de mémoires PUF,
- dépôt du reste de la deuxième couche diélectrique 320, tel que du nitrure de silicium, de manière à isoler électriquement-les motifs des cellules de mémoire de stockage et de mémoire PUF,
- planarisation de la deuxième couche diélectrique 320,
- gravure localisée de la deuxième couche diélectrique 320, par exemple par l'utilisation d'étapes successives de dépôt d'une résine photosensible, lithographie de ladite résine, de gravure chimique et de décapage de la résine photosensible, ceci de manière à libérer de deuxième couche diélectrique les emplacements destinés à la formation des deuxième vias verticaux 123, 223,
- dépôt en contact avec chacune des couches métalliques de contact 122, 222 libérée de deuxième couche diélectrique 320 lors de la gravure localisée , d'un matériau conducteur, tel que du nitrure de titane afin de former les vias verticaux 123, 223,
- planarisation de la deuxième couche diélectrique et du matériau conducteur déposé en excès afin de former les deuxième électrodes 120, 130 comme illustré sur les 6A et 6B.

Lors de l'étape de structuration de la première surface des premiers vias verticaux destinés à la formation d'une mémoire PUF 200, 200A, 200B, 200C, cette étape, conformément au procédé selon le présent mode de réalisation peut être réalisé à partir d'une gravure plasma ou d'une gravure ionique réactive. Dans, le cadre d'une telle gravure, les inventeurs ont qualifié différents types de gravure plasma permettant de modeler la surface des premiers vias verticaux, les résultats de cette qualification sont figurés dans le tableau ci-dessous.

| Plasma | Ra | ΔRa | Rmax | ΔRmax |
|---|---|---|---|---|
| Surface TiN | 0,1-0,2 nm | 0,1 nm | 0,9-1,1 nm | 0,2 nm |
| Plasma Cl₂ | 5,8-7 nm | 1,2 nm | 46,9-55,1 nm | 8,2 nm |
| Plasma HBr | 1,7-1,8 nm | 0,1 nm | 12,2-17,4 nm | 4,2 nm |
| Plama Cl₂/HBr | 0,6-0,7 nm | 0,2 nm | 5,8 -10 nm | 4,2 nm |
| Plama Cl₂/HBr/O₂ | 0,4-0,6 nm | 0,2 nm | 3,2-4,2 nm | 1 nm |
| Plasma Ar | 0,4-1 nm | 0,6 nm | 4,4-8,7 nm | 4-5 nm |

Pour cette qualification, pour chacun des différents gaz envisagés, à savoir le dichlore Cl₂, du bromure d'hydrogène HBr, un mélange de dichlore/bromure d'hydrogène Cl₂/HBr, un mélange de dichlore/bromure d'hydrogène/dioxygène Cl₂/HBr/O₂ et l'argon Ar, les inventeurs ont préalablement effectué une gravure ionique réactive au dichlore/bromure d'hydrogène/dioxygène Cl₂/HBr/O₂ de 5 secondes, afin de supprimer l'oxyde natif de la surface et ont utilisé une gravure audit plasma pour une durée de 15 s. Les valeurs obtenues sont comparées aux valeurs de rugosité de surface préalables à l'attaque indiquées sur la première ligne sous la référence « Surface TiN ».

On peut ainsi voir que chacun de ces gaz permet d'obtenir une augmentation significative de la dispersion de l'écart moyen de rugosité ΔRa et de la dispersion de la hauteur maximale de profil ΔRmax. Il est donc possible, avec chacun de ces gaz et en ajustant le temps de gravure de manière adéquate, de fournir, selon le principe de l'invention, une dispersion sur la rugosité de surface des premiers via verticaux 212, et donc de la couche d'oxyde 230, adaptée.

C'est ce qui est justement montré sur la figure 7. En effet, celle-ci montre graphiquement l'écart type de l'écart moyen de rugosité Ra d'une surface de nitrure de titane en fonction du temps de gravure et de la chimies de gravure utilisés, notamment pour des plasmas de dichlore Cl₂, un mélange de dichlore/bromure d'hydrogène Cl₂/HBr, un mélange de dichlore/bromure d'hydrogène/dioxygène Cl₂/HBr/O₂ et l'argon Ar. On peut ainsi voir qu'avec un plasma à base de dichlore, un temps de 5 s permet d'obtenir un écart type de l'écart moyen de rugosité Ra relativement important alors que, pour d'autres chimies de gravure (telles que le mélange de dichlore/bromure d'hydrogène/dioxygène Cl₂/HBr/O₂) il faut des temps de l'ordre 30 s pour obtenir un écart type de l'écart moyen de rugosité Ra du même ordre de grandeur que celle obtenue avec une gravure plasma à base de dichlore Cl₂.

Ainsi, selon le principe de l'invention, l'adaptation de la dispersions de l'écart moyen de rugosité rugosité Ra des premiers via verticaux 212 et donc de la portion de couche d'oxyde 230, peut être réalisée dans le cadre de ce premier mode de réalisation, en adaptant le temps de gravure et la chimie de gravure.

On notera que si dans le présent mode de réalisation, la dispersion de la rugosité de surface des portions de couche d'oxyde 230 des mémoires PUF est fournie pour chacune de la première et deuxième surface de contact 231, 232, il est néanmoins envisageable, sans que l'on sorte du cadre de l'invention que cette dispersion soit réalisée autrement et sur une seule de la première et deuxième surface de contact 231, 232. Ainsi par exemple, il pourrait être envisageable de modeler directement la surface des portions de couche diélectrique 230 ou encore de rétablir au moins en partie l'état de surface de la deuxième surface de contact 232 sans que l'on ne sorte du cadre de l'invention.

Pour finir et afin de « former » les mémoires, que celles-ci soient des mémoires PUF ou des mémoires de stockage, le procédé de fabrication du dispositif de microélectronique peut en outre comporter :
- l'application d'une « tension de forming » (ou tension de formation) entre la première et la deuxième électrodes de chacune des mémoires PUF, cette tension étant adaptée pour permettre la formation de sensiblement une moitié des mémoires PUF,
- l'application d'une « tension de forming » (ou tension de formation) supérieure à une tension de formation minimale de mémoire de stockage entre la première et la deuxième électrode de chacune des mémoires de stockage.

On notera que, selon une variante de l'invention non illustré, il est envisageable que les premières électrodes 110, 210 soient formées en plusieurs étapes avec une portion de couche métallique finale de ces dernières, comprenant la surface sur laquelle est déposé la portion de couche diélectrique correspondante, étant formée séparément pour les premières électrodes 110 destinée à la formation des mémoires de stockage et pour celle destinée à la formation des mémoires PUF. Ainsi, cette portion de couche métallique finale peut être formée, pour les premières électrodes 110 destinées à la formation des mémoires PUF, « structurée » avec une rugosité de surface plus importante que les portions de couche métallique finale.

Une telle formation séparément de ces portions de couche finale peut ainsi être réalisée, par exemple, par d'utilisation d'une méthode de dépôt différente et/ou par l'utilisation de conditions de dépôt différentes.

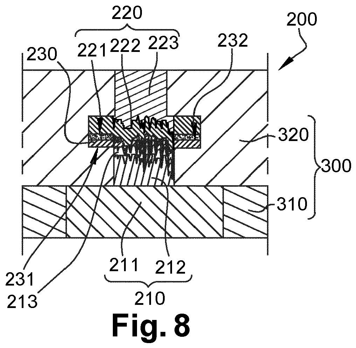

Selon une autre variante de l'invention, illustré sur la figure 8, les mémoires PUF peuvent comprendre chacune en outre une portion de couche diélectrique supplémentaire 213 disposée entre la première surface de contact 131 et la première électrode 210. Une telle portion de couche diélectrique supplémentaire 213 permet d'augmenter la « tension de forming » moyenne des mémoire PUF de telle manière qu'elle soit sensiblement identique à la tension de forming utilisée pour les mémoires de stockage. En effet, la rugosité de surface augmentée de la portion de couche diélectrique 130 des mémoires PUF si elle est à l'origine d'une augmentation de la dispersion de la « tension de forming » des mémoires PUF et également à l'origine d'une baisse de sa valeur moyenne. Ainsi, l'ajout d'une telle portion de couche diélectrique 213 permet d'augmenter la « tension de forming » des mémoires PUF et ainsi autorise l'utilisation d'une même tension de formation pour l'ensemble des mémoires, les mémoires de stockage et les mémoires PUF incluses.

La portion de couche diélectrique supplémentaire 213 est préférentiellement réalisée dans un oxyde natif du matériau de la première électrode 210. Bien entendu, la portion de couche diélectrique supplémentaire peut être formée d'un autre matériau diélectrique, tel que celui utilisé pour la portion de couche diélectrique, sans que l'on sorte du cadre de l'invention.

Le procédé de fabrication d'un dispositif de microélectronique 1 selon cette variante de l'invention se différencie du procédé de fabrication d'un dispositif de microélectronique selon ce présent mode de réalisation en ce que l'étape de formation d'une portion de couche diélectrique 130 comprend une sous-étape de formation pour chacune des portions de couche diélectrique 130 destinée à la formation des mémoires PUF d'une portion de couche diélectrique supplémentaire 213 de telle manière que cette portion de couche diélectrique supplémentaire 213 soit disposée entre la première surface de contact 131 et la première électrode 210. Une telle sous étape de formation de la portion de couche diélectrique supplémentaire 213 peut consister, après l'étape de structuration de la première électrode 210, à réaliser une oxydation superficielle de la surface de la première électrode 210.

On notera également que dans le cadre de la présente variante, et afin de « former » les mémoires, que celles-ci soient des mémoires PUF ou des mémoires de stockage, dans le cadre du procédé de fabrication du dispositif de microélectronique 1, la « tensions de forming » peut être identique pour les mémoires PUF et les mémoires de stockage.

Selon une alternative à la présente variante non illustrée, il est également envisageable que les mémoires PUF comprennent la portion de couche diélectrique supplémentaire entre la deuxième surface 132 et la deuxième électrode 220. Ainsi, d'une manière identique à la portion de couche diélectrique supplémentaire de la présente variante, les mémoires PUF peuvent présenter une « tension de forming » augmenter afin d'autoriser autorise l'utilisation d'une même tension de formation pour l'ensemble des mémoires, les mémoires de stockage et les mémoires PUF incluses.

De plus, si dans les présents modes de réalisation les portions de couche diélectrique sont en contact par chacune de leur première et deuxième surface de contact avec la première et la deuxième électrode correspondantes, il est également envisageable, sans que l'on sorte du cadre de l'invention, qu'il soit prévu une couche intermédiaire faisant interface entre ladite surface de contact et l'électrode correspondante.

## Revendications

1. Procédé de fabrication d'un dispositif de microélectronique (1) comprenant une pluralité de mémoires résistives (100, 100A, 100B, 100C, 200, 200A, 200B, 200C), une première partie (20) de ces mémoires résistives (100, 100A, 100B, 100C, 200, 200A, 200B, 200C) étant configurée pour former une fonction physique non-clonable, plus connue sous le sigle anglais PUF, les mémoires résistives (200, 200A, 200B, 200C) de ladite première partie (20) de mémoires résistives étant dites mémoires PUF, une deuxième partie (10) de mémoire résistive étant destinée à fournir une fonction de mémoire au dispositif de microélectronique (1), les mémoires résistives (100, 100A, 100B, 100C) de la deuxième partie étant dite mémoire de stockage, le procédé de fabrication comprenant les étapes successives suivantes :
- fourniture d'un support (310) comprenant une pluralité de premières électrodes (110, 210) métalliques,
- pour chaque première électrode (110, 210), formation d'une portion de couche diélectrique (130) comprenant une première surface de contact (131) en regard de la première électrode (110, 210) correspondante et une deuxième surface (132) opposée à la première surface de contact (131), les portions de couche diélectrique (130) destinée à la formation des mémoires PUF (200, 200A, 200B, 200C) présentant, sur au moins l'une de la première surface de contact (131) et de la deuxième surface (132), une rugosité de surface supérieure à celle de la même surface des portions de couche diélectrique destinée à la formation des mémoires de stockage,
- pour chaque portion de couche diélectrique (130, 230), formation d'une deuxième électrode (120, 220) en regard de la deuxième surface (132), ladite deuxième surface (132) étant alors une deuxième surface de contact en regard de la deuxième électrode (120, 220) et la portion de couche diélectrique (130, 230) étant interposée entre la première et la deuxième électrode (120, 220), les mémoires résistives (100, 100A, 100B, 100C, 200, 200A, 200B, 200C) étant ainsi formées.

2. Procédé de fabrication d'un dispositif de microélectronique (1) selon la revendication 1, dans lequel l'étape de formation de la portion de couche diélectrique (130, 230) comprend les sous-étapes suivantes :
- structuration d'une surface des premières électrodes (110, 210) correspondantes aux mémoires PUF (200, 200A, 200B, 200C) de manière à ce que lesdites premières électrodes (210) présentent une rugosité de surface supérieure à celles des première électrodes correspondant aux mémoires de stockage,
- dépôt de chaque portion de couche diélectrique (130, 230) en contact de la première surface de la première électrode (110, 210) correspondante de manière à ce que la rugosité de la première surface de la première électrode (110, 210) soit au moins partiellement reportée sur la première surface de contact (131, 231) de la portion de couche diélectrique (130, 230) correspondante, cette rugosité reportée étant, pour les portions de couche diélectrique (230) destinées à la formation des mémoire PUF (200, 200A, 200B, 200C) supérieure à celle des portions de couche diélectrique (130) destinée à la formation des mémoire de stockage.

3. Procédé de fabrication d'un dispositif de microélectronique (1) selon la revendication 2, dans lequel la sous-étape de structuration est fournie par une gravure des premières électrodes (110, 210) destinée à la formation des mémoires PUF (200, 200A, 200B, 200C), ladite surface des premières électrodes (110, 210) étant préférentiellement gravée au moyen d'une technique de gravure au plasma ou de gravure ionique réactive.

4. Procédé de fabrication d'un dispositif de microélectronique (1) selon la revendication 2 ou 3, dans lequel lors de la sous-étape de dépôt de chaque portion de couche diélectrique (130, 230), le dépôt du matériau diélectrique formant lesdites portions de couche diélectrique (130, 230) est réalisé par un dépôt de couches minces atomiques.

5. Procédé de fabrication d'un dispositif de microélectronique (1) selon la revendication 2 ou 3, dans lequel lors de la sous-étape de dépôt de chaque portion de couche diélectrique (130, 230), le dépôt du matériau diélectrique formant lesdites portions de couche diélectrique (130, 230) est réalisé par un dépôt physique en phase vapeur.

6. Procédé de fabrication d'un dispositif de microélectronique (1) selon l'une quelconques des revendications 2 à 5, dans lequel lors de l'étape de formation de la portion de couche diélectrique, il est prévu :
- préalablement à la sous-étape de structuration d'une surface des premières électrodes, une sous-étape de protection des premières électrodes destinées à la formation des mémoires de stockage afin de protéger lesdites premières électrodes lors de la sous-étape de structuration de la surface des premières électrodes, et
entre les sous-étapes de structuration et de dépôt de chaque portion de couche diélectrique, il est prévu une sous-étape de suppression de la protection des premières électrodes destinées à la formation des mémoires de stockage.

7. Procédé de fabrication d'un dispositif de microélectronique (1) selon l'une quelconque des revendications 1 à 6, dans lequel les mémoires résistives sont des mémoires résistives à base d'oxyde,
et dans lequel lors de l'étape de formation de la portion de couche diélectrique pour chaque première électrode, chaque portion de couche diélectrique destinée à la formation d'une mémoire PUF, l'au moins une surface, parmi la première surface de contact et la deuxième surface présente une valeur d'écart moyen de rugosité Ra comprise entre 1 et 3 nm, 1 et 3 nm compris, voire entre 2 et 3 nm, 2 et 3 nm compris.

8. Procédé de fabrication selon l'une quelconque des revendications 1 à 6, dans lequel les mémoires résistives sont des mémoires résistives à pont conducteur.

9. Procédé de fabrication d'un dispositif de microélectronique (1) selon l'une quelconque des revendications 1 à 8, dans lequel sont en outre prévues les étapes suivantes d' :
- application d'une tension de formation entre la première et la deuxième électrodes de chacune des mémoires PUF, cette tension étant adaptée pour permettre la formation de sensiblement une moitié des mémoires PUF,
- application d'une tension de formation supérieure à une tension de formation minimale de mémoire de stockage entre la première et la deuxième électrode de chacune des mémoires de stockage.

10. Procédé de fabrication d'un dispositif de microélectronique (1) selon l'une quelconque des revendications 1 à 9, dans lequel l'étape de formation d'une portion de couche diélectrique (130) comprend une sous-étape de formation pour chacune des portions de couche diélectrique (130) destinée à la formation des mémoires PUF (200, 200A, 200B, 200C) d'une portion de couche diélectrique supplémentaire (213) de telle manière que cette portion de couche diélectrique supplémentaire (213) soit disposée entre la première surface de contact (131) et la première électrode (110, 210).

11. Dispositif de microélectronique (1) comprenant une pluralité de mémoires résistives (100, 200), une première partie (20) de ces mémoires résistives (100, 200) étant configurée pour former une fonction physique non-clonable, plus connue sous le sigle anglais PUF, les mémoires résistives (200) de ladite première partie (20) de mémoires résistives étant dites mémoires PUF, une deuxième partie (10) de mémoire résistive étant destinée à fourniture d'une fonction de mémoire au dispositif de microélectronique (1), les mémoires résistives de la deuxième partie étant dite mémoire de stockage, le dispositif comprenant un support, chaque mémoire résistive comprenant :
- une première électrode (110, 210) métallique et une deuxième électrode (120, 220) métallique, la première électrode (110) étant aménagée dans un support (310),
- une portion de couche diélectrique s'interposant entre la première et la deuxième électrode (110, 120, 210, 220) et présentant une première surface de contact (131, 231) en regard avec la première électrode (110, 210) et une deuxième surface (132, 232) de contact en regard avec la deuxième électrode (120, 220),
le dispositif de microélectronique (1) **étant caractérisé en ce que** les portions de couche diélectrique (130) des mémoires PUF (200, 200A, 200B, 200C) présentent, sur au moins l'une de la première surface de contact (131) et de la deuxième surface (132) de contact, une rugosité de surface de ladite surface supérieure à celle de la même surface des portions de couche diélectrique (130) des mémoires de stockage.

12. Dispositif de microélectronique (1) selon la revendication 11, dans lequel les mémoires résistives sont des mémoires résistives à base d'oxyde,
et dans lequel les portions de couche diélectrique des mémoires PUF présentent sur au moins l'une de la première et la deuxième surface de contact une valeur d'écart moyen de rugosité Ra compris entre 1 et 3 nm, 1 et 3 nm compris, cet écart moyen de rugosité Ra étant préférentiellement compris entre 2 et 3 nm.

13. Dispositif de microélectronique (1) selon la revendication 11 ou 12, dans lequel les mémoires résistives sont des mémoires résistives à pont conducteur.

14. Dispositif de microélectronique (1) selon l'une quelconque des revendications 11 à 13, dans lequel les mémoires PUF comprennent chacune en outre une portion de couche diélectrique supplémentaire (213) disposée entre la première surface de contact (131) et la première électrode (110, 210).

## Patentansprüche

1. Herstellungsverfahren einer mikroelektronischen Vorrichtung (1), eine Vielzahl von resistiven Speichern (100, 100A, 100B, 100C, 200, 200A, 200B, 200C) umfassend, wobei ein erster Teil (20) der resistiven Speicher (100, 100A, 100B, 100C, 200, 200A, 200B, 200C) so konfiguriert ist, dass er eine nicht klonbare physische Funktion bildet, besser bekannt unter der englischen Abkürzung PUF, wobei die resistiven Speicher (200, 200A, 200B, 200C) des ersten Teils (20) von resistiven Speichern als PUF-Speicher bezeichnet werden und ein zweiter Teil (10) des resistiven Speichers zum Bereitstellen einer Speicherfunktion für die mikroelektronische Vorrichtung (1) bestimmt ist, wobei die resistiven Speicher (100, 100A, 100B, 100C) des zweiten Teils als Massenspeicher bezeichnet werden, wobei das Herstellungsverfahren die folgenden aufeinanderfolgenden Schritte umfasst:
- Bereitstellen einer Unterlage (310), eine Vielzahl von ersten metallischen Elektroden (110, 210) umfassend,
- für jede erste Elektrode (110, 210), Bildung eines dielektrischen Schichtbereichs (130), der eine erste Kontaktoberfläche (131) umfasst, die der entsprechenden ersten Elektrode (110, 210) zugewandt ist und eine zweite Oberfläche (132) gegenüber der ersten Kontaktoberfläche (131), wobei die für die Bildung der PUF-Speicher (200, 200A, 200B, 200C) bestimmten dielektrischen Schichtbereiche (130) auf mindestens einer der ersten Kontaktoberflächen (131) und der zweiten Oberfläche (132) eine Oberflächenrauheit aufweisen, die größer ist als die der gleichen Oberfläche der dielektrischen Schichtbereiche, die zur Bildung der Massenspeicher bestimmt ist,
- für jeden dielektrischen Schichtbereich (130, 230), Bildung einer zweiten Elektrode (120, 220), die der zweiten Oberfläche (132) zugewandt ist, wobei die zweite Oberfläche (132) dann eine zweite Kontaktoberfläche ist, die der zweiten Elektrode (120, 220) zugewandt ist und der dielektrische Schichtbereich (130, 230) zwischen der ersten und der zweiten Elektrode (120, 220) eingesetzt ist, wobei die resistiven Speicher (100, 100A, 100B, 100C, 200, 200A, 200B, 200C) so gebildet werden.

2. Herstellungsverfahren einer mikroelektronischen Vorrichtung (1) nach Anspruch 1, wobei der Schritt zur Bildung des dielektrischen Schichtbereichs (130, 230) die folgenden Teilschritte umfasst:
- Strukturierung einer Oberfläche der ersten Elektroden (110, 210), die den PUF-Speichern (200, 200A, 200B, 200C) entsprechen, so dass die ersten Elektroden (210) eine höhere Oberflächenrauheit aufweisen als die ersten Elektroden, die den Massenspeichern entsprechen,
- Abscheidung jedes dielektrischen Schichtbereichs (130, 230), der mit der ersten Oberfläche der entsprechenden ersten Elektrode (110, 210) in Kontakt steht, so dass die Rauheit der ersten Oberfläche der ersten Elektrode (110, 210) mindestens teilweise auf die erste Kontaktoberfläche (131, 231) des entsprechenden dielektrischen Schichtbereichs (130, 230) übertragen wird, wobei diese übertragene Rauheit, für die dielektrischen Schichtbereiche (230), die zur Bildung der PUF-Speicher (200, 200A, 200B, 200C) bestimmt sind, größer ist als die der dielektrischen Schichtbereiche (130), die zur Bildung von Massenspeichern bestimmt ist.

3. Herstellungsverfahren einer mikroelektronischen Vorrichtung (1) nach Anspruch 2, wobei der Teilschritt der Strukturierung durch Ätzen der ersten Elektroden (110, 210), die zur Bildung der PUF-Speicher (200, 200A, 200B, 200C) bestimmt sind, bereitgestellt wird, wobei die Oberfläche der ersten Elektroden (110, 210) vorzugsweise mittels einer Technik des Plasmaätzens oder physikalisch-chemischen Ätzens geätzt wird.

4. Herstellungsverfahren einer mikroelektronischen Vorrichtung (1) nach Anspruch 2 oder 3, wobei im Teilschritt der Abscheidung jedes dielektrischen Schichtbereichs (130, 230) die Abscheidung des dielektrischen Materials, das die dielektrischen Schichtbereiche (130, 230) bildet, durch eine Abscheidung atomarer Dünnschichten realisiert wird.

5. Herstellungsverfahren einer mikroelektronischen Vorrichtung (1) nach Anspruch 2 oder 3, wobei im Teilschritt der Abscheidung jedes dielektrischen Schichtbereichs (130, 230) die Abscheidung des dielektrischen Materials, das die dielektrischen Schichtbereiche (130, 230) bildet, durch eine physikalische Gasphasenabscheidung realisiert wird.

6. Herstellungsverfahren einer mikroelektronischen Vorrichtung (1) nach einem der Ansprüche 2 bis 5, wobei im Schritt der Bildung des dielektrischen Schichtbereichs vorgesehen ist:
- vor dem Teilschritt der Strukturierung einer Oberfläche der ersten Elektroden, ein Teilschritt des Schutzes der ersten Elektroden, die zur Bildung der Massenspeicher bestimmt sind, um die ersten Elektroden im Teilschritt der Strukturierung der Oberfläche der ersten Elektroden zu schützen, und
zwischen den Teilschritten der Strukturierung und Abscheidung jedes dielektrischen Schichtbereichs, ist ein Teilschritt vorgesehen zur Unterdrückung des Schutzes der ersten Elektroden, die zur Bildung der Massenspeicher bestimmt sind.

7. Herstellungsverfahren einer mikroelektronischen Vorrichtung (1) nach einem der Ansprüche 1 bis 6, wobei die resistiven Speicher auf Oxid basierende resistive Speicher sind,
und wobei im Schritt der Bildung des dielektrischen Schichtbereichs für jede erste Elektrode jeder dielektrische Schichtbereich, der für die Bildung eines PUF-Speichers bestimmt ist, die mindestens eine Oberfläche unter der ersten Kontaktoberfläche und die zweite Oberfläche einen durchschnittlichen Abweichwert der Rauheit Ra zwischen 1 und 3 nm, 1 und 3 nm eingeschlossen, beziehungsweise zwischen 2 und 3 nm, 2 und 3 nm eingeschlossen aufweist.

8. Herstellungsverfahren nach einem der Ansprüche 1 bis 6, wobei die resistiven Speicher resistive Speicher mit leitender Brücke sind.

9. Herstellungsverfahren einer mikroelektronischen Vorrichtung (1) nach einem der Ansprüche 1 bis 8, wobei ferner die folgenden Schritte vorgesehen sind:
- Anlegen einer Bildungsspannung zwischen der ersten und der zweiten Elektrode in jedem der PUF-Speicher, wobei diese Spannung angepasst ist, um die Bildung von im Wesentlichen einer Hälfte der PUF-Speicher zu ermöglichen,
- Anlegen einer Bildungsspannung, die größer ist als eine minimale Bildungsspannung des Massenspeichers zwischen der ersten und der zweiten Elektrode in jedem der Massenspeicher.

10. Herstellungsverfahren einer mikroelektronischen Vorrichtung (1) nach einem der Ansprüche 1 bis 9, wobei der Schritt der Bildung eines dielektrischen Schichtbereichs (130) einen Teilschritt der Bildung für jeden der dielektrischen Schichtbereiche (130) umfasst, der zur Bildung der PUF-Speicher (200, 200A, 200B, 200C) eines zusätzlichen dielektrischen Schichtbereichs (213) bestimmt ist, so dass der zusätzliche dielektrischen Schichtbereich (213) zwischen der ersten Kontaktoberfläche (131) und der ersten Elektrode (110, 210) angeordnet ist.

11. Mikroelektronische Vorrichtung (1), die eine Vielzahl von resistiven Speichern (100, 200) umfasst, wobei ein erster Teil (20) der resistiven Speicher (100, 200) so konfiguriert ist, dass er eine nicht klonbare physische Funktion bildet, besser bekannt unter der englischen Abkürzung PUF, wobei die resistiven Speicher (200) des ersten Teils (20) von resistiven Speichern als PUF-Speicher bezeichnet werden und ein zweiter Teil (10) des resistiven Speichers zum Bereitstellen einer Speicherfunktion für die mikroelektronische Vorrichtung (1) bestimmt ist, wobei die resistiven Speicher des zweiten Teils als Massenspeicher bezeichnet werden, wobei die Vorrichtung eine Unterlage umfasst, wobei jeder resistive Speicher umfasst:
- Eine erste metallische Elektrode (110, 210) und eine zweite metallische Elektrode (120, 220), wobei die erste Elektrode (110) in einer Unterlage (310) eingerichtet ist,
- einen dielektrischen Schichtbereich, der zwischen der ersten und der zweiten Elektrode (110, 120, 210, 220) eingesetzt ist und eine erste Kontaktoberfläche (131, 231) aufweist, die der ersten Elektrode (110, 210) zugewandt ist und eine zweite Kontaktoberfläche (132, 232), die der zweiten Elektrode (120, 220) zugewandt ist,
wobei die mikroelektronische Vorrichtung (1) **dadurch gekennzeichnet ist, dass** die dielektrischen Schichtbereiche (130) der PUF-Speicher (200, 200A, 200B, 200C) auf mindestens einer der ersten Kontaktoberflächen (131) und der zweiten Kontaktoberfläche (132) eine Oberflächenrauheit dieser Oberfläche aufweisen, die größer ist als die der gleichen Oberfläche der dielektrischen Schichtbereiche (130) der Massenspeicher.

12. Mikroelektronische Vorrichtung (1) nach Anspruch 11, wobei die resistiven Speicher auf Oxid basierende resistive Speicher sind, und wobei die dielektrischen Schichtbereiche der PUF-Speicher auf mindestens einer der ersten und der zweiten Kontaktoberfläche einen durchschnittlichen Abweichwert der Rauheit Ra zwischen 1 und 3 nm, 1 und 3 nm eingeschlossen aufweisen, wobei der durchschnittliche Abweichwert der Rauheit Ra vorzugsweise zwischen 2 und 3 nm liegt.

13. Mikroelektronische Vorrichtung (1) nach Anspruch 11 oder 12, wobei die resistiven Speicher resistive Speicher mit leitender Brücke sind.

14. Mikroelektronische Vorrichtung (1) nach einem der Ansprüche 11 bis 13, wobei jeder der PUF-Speicher ferner einen zusätzlichen dielektrischen Schichtbereich (213) umfasst, der zwischen der ersten Kontaktoberfläche (131) und der ersten Elektrode (110, 210) angeordnet ist.

## Claims

1. A method for manufacturing a microelectronic device (1) comprising a plurality of resistive memories (100, 100A, 100B, 100C, 200, 200A, 200B, 200C) a first part (20)of these resistive memories (100, 100A, 100B, 100C, 200, 200A, 200B, 200C)being configured to form an unclonable physical function, better known as the acronym PUF, the resistive memories (200, 200A, 200B, 200C) of said first part (20) of resistive memories being said PUF memories, a second part (10) of resistive memories being to provide a memory function to the microelectronic device (1), the resistive memories (100, 100A, 100B, 100C) of the second part (10) being called storage memories, the manufacturing method comprising the following successive steps of:
- providing a support (310) comprising a plurality of first metal electrodes,
- for each first electrode (110, 210), forming a dielectric layer portion (130) comprising a first contact surface (131) facing the corresponding first electrode (110, 210) and a second surface (132) opposite to the first contact surface (131), the dielectric layer portions (130) for forming the PUF memories having, on at least one of the first contact surface (131) and the second surface (132), a surface roughness greater than that of the same surface of the dielectric layer portions for forming the storage memories,
- for each dielectric layer portion (130, 230), forming a second electrode (120, 220) facing the second surface (132), said second surface (132) then being a second contact surface facing the second electrode (120, 220) and the dielectric layer portion (130, 230) being interposed between the first and second electrodes (120, 230), the resistive memories (100, 100A, 100B, 100C, 200, 200A, 200B, 200C) being thus formed.

2. The method for manufacturing a microelectronic device (1) according to claim 1, wherein the step of forming the dielectric layer portion (130, 230) for each first electrode comprises the following sub-steps of:
- structuring a surface of each first electrode (110, 210) corresponding to the PUF memories(200, 200A, 200B, 200C) so that said first electrodes (210) have a surface roughness greater than the surface of the first electrodes corresponding to the storage memories,
- depositing each dielectric layer portion (130, 230) in contact with the first surface of the corresponding first electrode (110, 210) in such a way that the roughness of the surface of the first electrode (110, 210) is at least partially transferred to the first contact surface (131, 231) of the corresponding dielectric layer portion (130, 230), this transferred roughness (230) being, for dielectric layer portions for forming the PUF memories (200, 200A, 200B, 200C), greater than the transferred roughness for the dielectric layer portions (130) for forming the storage memories.

3. The method for manufacturing a microelectronic device (1) according to claim 2, wherein the substep of structuring is provided by etching the first electrodes (110, 210) for forming the PUF memories, said surface of the first electrodes (110, 210) being preferably etched by means of a plasma etching or reactive ion etching technique.

4. The method for manufacturing a microelectronic device according to claim 2 or 3, wherein during the substep of depositing each dielectric layer portion (130, 230), depositing a dielectric material forming the dielectric layer portions (130, 230) is carried out by atomic layer deposition.

5. The method for manufacturing a microelectronic device according to claim 2 or 3, wherein during the substep of depositing each dielectric layer portion (130, 230), depositing a dielectric material forming the dielectric layer portions (130, 230) is carried out by physical vapour deposition.

6. The method for manufacturing a microelectronic device (1) according to any one from claims 2 to 5, wherein during the step of forming the dielectric layer portion for each first electrode, it is provided:
- prior to the sub-step of structuring a surface of the first electrodes, a substep of protecting the first electrodes for the formation of the storage memories in order to protect said first electrodes during the sub-step of structuring the surface of the first electrodes, and
between the sub-steps of structuring and depositing each dielectric layer portion, there is a sub-step of removing the protection of the first electrodes for forming the storage memories.

7. The method for manufacturing a microelectronic device (1) according to any one from claims 1 to 6, wherein the resistive memories are oxide-based resistive memories,
and wherein in the step of forming the dielectric layer portion for each first electrode, for each dielectric layer portion for forming a PUF memory, the at least one surface of the first contact surface and the second surface has a mean roughness deviation Ra value of between 1 and 3 nm, 1 and 3 nm included, or between 2 and 3 nm, 2 and 3 nm included.

8. The manufacturing method according to any one form claims 1 to 6, wherein the resistive memories are conductive bridging resistive memories.

9. The method for manufacturing a microelectronic (1) device according to any one from claims 1 to 8, wherein there are additionally provided the following steps of:
- applying a forming voltage between the first and second electrodes of each of the PUF memories, this voltage being adapted to allow the formation of substantially one half of the PUF memories,
- applying a forming voltage higher than a minimum storage memory forming voltage between the first and second electrode of each of the storage memories.

10. The method for manufacturing a microelectronic device (1) according to any one from claims 1 to 9, wherein the step of forming a dielectric layer portion (130) for each first electrode comprises a substep of forming, for each of the dielectric layer portions (130) for forming a PUF memory (200, 200A, 200B, 200C), an additional dielectric layer portion (213) in such a manner that this additional dielectric layer portion (213) is disposed between the first contact surface (131) and the first electrode (110, 210).

11. A microelectronic device (1) comprising a plurality of resistive memories (110, 200) , a first part (20) of these resistive memories (100, 200) being configured to form an unclonable physical function, better known as the acronym PUF, the resistive memories (200) of said first part (20) of resistive memories being called PUF memories, a second part (10) of resistive memories being to provide a memory function to the microelectronic device (1), the resistive memories of the second part being called storage memories, the device comprising a support, each resistive memory comprising :
- a first metal electrode (110, 210) and a second metal electrode (120, 220, the first electrode (110) being arranged in a support (310),
- a dielectric layer portion interposed between the first and second electrodes (110, 120, 210, 220) and having a first contact surface (131, 231) facing the first electrode (110, 210) and a second contact surface (132, 232) facing the second electrode (120, 220),
The microelectronic device (1) being **characterized in that** the dielectric layer portions (130) of the PUF memories (200, 200A, 200B, 200C) have, on at least one of the first contact surface (131) and the second contact surface (132), a surface roughness of said surface greater than that of the same surface of the dielectric layer portions (130) of the storage memories.

12. The microelectronic device according to claim 11, wherein the resistive memories are oxide-based resistive memories,
and wherein the dielectric layer portions of the PUF memories have on at least one of the first and second contact surfaces a mean roughness deviation Ra value of between 1 and 3 nm, 1 and 3 nm included, this mean roughness deviation Ra being preferably between 2 and 3 nm.

13. The microelectronic device (1) according to claim 11 or 12, wherein the resistive memories are conductive bridging resistive memories.

14. The microelectronic device (1) according to any one from claim 11 to 13, wherein the PUF memories each further comprise an additional dielectric layer portion (213) disposed between a first contact surface (131) facing the first electrode (110, 210).
